(19) **Europäisches Patentamt**
**European Patent Office**
**Office européen des brevets**

(11) **EP 4 745 398 A1**

(12) **EUROPÄISCHE PATENTANMELDUNG**

(43) Veröffentlichungstag:
**20.05.2026 Patentblatt 2026/21**

(21) Anmeldenummer: **24212772.8**

(22) Anmeldetag: **13.11.2024**

(51) Internationale Patentklassifikation (IPC):
***F03D 5/06*** *(2006.01)*

(52) Gemeinsame Patentklassifikation (CPC):
**F03D 5/06**; F05B 2220/709

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder:
• **AIRS Cyberbionics UG (haftungsbeschränkt)**
**58455 Witten (DE)**

• **Cyberbiodyne Systems Corporation**
**Newark, DE 19713 (US)**

(72) Erfinder: **Topcu, Murat**
**58455 Witten (DE)**

(74) Vertreter: **Mzb PartmbB**
**Schloßberg 10**
**71032 Böblingen (DE)**

(54) **FLUIDKRAFTANLAGE UND VERFAHREN ZUR ERZEUGUNG VON ELEKTRISCHER ENERGIE**

(57) Die Erfindung betrifft eine **Fluidkraftanlage (10)**, umfassend einen Generator (24), einen Wirbelerzeuger (18) und einen Schwinger (20), der, wenn er von einem Fluid, insbesondere Luft, umströmt wird, zu einer oszillierenden Bewegung angeregt wird. Sie ist dadurch gekennzeichnet, dass der Wirbelerzeuger (18) und / oder der Schwinger (20) eine längliche Form mit einer Längsachse (L) aufweist oder aufweisen, wobei sich der Querschnitt des Wirbelerzeugers (18) und / oder des Schwingers (20) entlang der Längsachse (L) in wenigstens zwei Freiheitsgraden ändert. Ferner betrifft die Erfindung ein Verfahren (1000). Die Erfindung ermöglicht eine besonders effiziente Erzeugung elektrischer Energie.

Fig. 1

**EP 4 745 398 A1**

**Beschreibung**

Die Erfindung betrifft eine Fluidkraftanlage, umfassend einen Generator, einen Wirbelerzeuger und einen Schwinger, der, wenn er von einem Fluid, insbesondere Luft, umströmt wird, zu einer oszillierenden Bewegung angeregt wird.

Eine solche Fluidkraftanlage, insbesondere in Form einer Windkraftanlage, ist aus der US 9444372 B2 bekannt. Bei der dort beschriebenen Fluidkraftanlage bilden der Wirbelerzeuger und der Schwinger ein zylindrisches, zusammengehörendes Element. Wird das Element durch Wind angeströmt, so bilden sich Wirbelablösungen, durch die sich das Element selbst zu Schwingungen senkrecht zur Windrichtung angeregt wird. Aus der in den Schwingungen enthaltenen Bewegungsenergie wird elektrische Energie erzeugt.

Die Fluidkraftanlage sollte auch in besiedeltem Gebiet nutzbar sein. Sie sollte vorzugsweise auch bei geringen Bauhöhen bereits Energie liefern können. Da jedoch bei geringen Bauhöhen nur geringe Abstände vom Boden erreichbar sind, sind die Windgeschwindigkeiten, mit denen Wind gegen die Fluidkraftanlage strömt, gering. Die dem Wind entnehmbare Leistung verhält sich jedoch überproportional zur Windgeschwindigkeit. Umso wichtiger ist es, dass die Fluidkraftanlage eine möglichst hohe Effizienz hinsichtlich der Ausbeute an Windenergie bietet.

Aufgabe der vorliegenden Erfindung ist es daher, eine Fluidkraftanlage sowie ein Verfahren anzubieten, die es ermöglichen, aus einem Fluidstrom bereits bei geringer Fluid-Geschwindigkeit eine oszillierende Bewegung zu generieren und die Bewegung in elektrische Energie mit einer besonders hohen Effizienz umwandeln zu können.

Die Aufgabe wird gelöst durch eine **Fluidkraftanlage,** umfassend einen Generator, einen Wirbelerzeuger und einen Schwinger, der, wenn er von einem Fluid, insbesondere Luft, umströmt wird, zu einer oszillierenden Bewegung angeregt wird, wobei der Wirbelerzeuger und / oder der Schwinger eine längliche Form mit einer Längsachse aufweist oder aufweisen, wobei sich die Form des Querschnitts des Wirbelerzeugers und / oder des Schwingers entlang der Längsachse ändert. Die Formen der Querschnitte unterscheiden sich somit abhängig von der jeweiligen Schnittebene entlang der Längsachse. Insbesondere sind nicht alle Querschnitte durch rein proportionale Skalierung ineinander überführbar. So kann dies bedeuten, dass sich zwei verschiedene Abschnitte entlang der Längsachse nicht nur in ihrer Größe unterscheiden.

Besonders bevorzugt ändern sich die Formen der Querschnitte entlang wenigstens der Hälfte der Längsachse des Wirbelerzeugers und / oder des Schwingers.

Im eingangs genannten Stand der Technik wird ein Schwinger vorgestellt, der als Zylinder geformt ist. Ein Abschnitt mit einem zylindrischen Querschnitt führt zu einer Kármánschen Wirbelstraße mit einer Eigenfrequenz der Wirbelablösungen, die zumindest in einem mittleren Geschwindigkeitsbereich näherungsweise proportional zur Fluidgeschwindigkeit ist. Somit lassen sich die durch einen Zylinder ausgelösten Wirbelablösungen zumindest in diesem mittleren Geschwindigkeitsbereich durch eine sogenannte Strouhal-Zahl Sr charakterisieren.

Die Frequenz f ergibt sich bei einem Zylinder näherungsweise aus der sogenannten Strouhal-Zahl Sr, der Fluidgeschwindigkeit v und einem Durchmesser L des Zylinders als

$$f = Sr * v / L$$

Für einen Zylinder beträgt die Strouhal-Zahl Sr in dem mittleren Geschwindigkeitsbereich bzw. für mittlere Reynolds-Zahlen typischerweise ca. 0,21.

Um eine gute Energieübertragung zwischen dem Fluid und dem Schwinger zu gewährleisten, sollte versucht werden, den Schwinger in Resonanz mit den Wirbelablösungen zu betreiben. Dazu sieht der oben genannte Stand der Technik vor, die Eigenfrequenz des Schwingers zu variieren.

Ein Gedanke der Erfindung ist nun, dass typischerweise, gerade in niedrigen Höhen über Grund, Fluidgeschwindigkeiten, beispielsweise aufgrund von Reibungseffekten oder Hindernissen, sehr stark variieren. Teilweise steigen Fluidgeschwindigkeiten exponentiell mit dem Abstand von einem Boden an. Damit variiert aber die Frequenz, mit der sich Wirbelablösungen entlang des Wirbelerzeugers bilden können.

Damit kann die Eigenfrequenz des zylindrischen Schwingers nicht auf alle Wirbelablösungen entlang eines als Zylinder geformten Wirbelerzeugers abgestimmt werden.

Hier schlägt die Erfindung vor, entlang der Längsachse des Wirbelerzeugers und / oder entlang der Längsachse des Schwingers die Form des Querschnitts zu variieren.

Somit wird es möglich, die Frequenz der Wirbelablösungen entlang der betreffenden Längsachse trotz zu erwartender Geschwindigkeitsunterschiede des anströmenden Fluids konstant oder zumindest in geeigneter Weise verlaufend auszulegen.

Somit kann die Eigenfrequenz des Schwingers auf die Frequenzen, mit denen sich Wirbelablösungen entlang des Wirbelerzeugers bilden, sehr präzise angepasst werden.

Die Effizienz, mit der Wirbelablösungen erzeugt werden und mit der aus den Wirbelablösungen Energie entzogen werden kann, kann somit erheblich verbessert werden.

Allgemein ist somit ein Gedanke der Erfindung, das Schwingungsverhalten des Schwingers und / oder die Erzeugung von Wirbelablösungen mithilfe des Wirbelerzeugers im Vergleich zu zylindrischen Lösungen zu verbessern.

Auch können die Wechselwirkungen zwischen dem Schwinger in verschiedenen Abschnitten mit dem diese Abschnitten umgebenden Fluid für die einzelnen Abschnitte durch geeignete Anpassung der Formen der Querschnitte optimiert werden.

Insgesamt kann dies dazu führen, dass trotz unterschiedlicher Windgeschwindigkeiten in unterschiedlichen Höhen über dem Boden der Schwinger gegenüber dem Stand der Technik verbessert zu Schwingungen angeregt wird.

Auch ist es möglich, durch eine sich über die Längsachse des Wirbelerzeugers hinweg ändernde Form des Querschnitts das Muster der gebildeten Wirbelablösungen entlang der Längsachse des Wirbelerzeugers zu beeinflussen. Je nach beispielsweise Reynolds-Zahl und je nach Windgeschwindigkeit können sich an ein und derselben Form unterschiedliche Muster von Wirbelablösungen ausbilden. Während beispielsweise bei niedrigen Fluidgeschwindigkeiten und damit niedrigen Reynolds-Zahlen sequenziell sich ablösende Einzelwirbel bei vielen Formen von Querschnitten bilden können, treten beispielsweise bei höheren Reynolds-Zahlen, bei gleicher Form des jeweiligen Querschnitts, häufig sich paarweise ablösende Wirbel auf. Wählt man somit in Abschnitten, die höhere Fluidgeschwindigkeiten erwarten lassen, andere Formen von Querschnitten als in Abschnitten, die eine niedrigere Fluidgeschwindigkeit erwarten lassen, so kann der Wirbelerzeuger ausgebildet sein, dass das Muster der Wirbelablösungen entlang seiner Längsachse oder zumindest entlang eines (größeren) Abschnitts seiner Längsachse konstant bleibt. Das Muster der Wirbelablösungen kann sich auch entlang der Längsachse verändern, und zwar vorzugsweise derart, dass wiederum ein Energieübertrag aus den Wirbelablösungen in den Schwinger hinein auf die jeweilige Schwingungsamplitude des Schwingers entlang der Längsachse abgestimmt ist. Auch hierdurch lässt sich die Effizienz weiter steigern.

Es hat sich ferner gezeigt, dass die Frequenz, mit der sich Wirbelablösungen bilden, ebenfalls von der Oberflächenrauheit abhängen kann und somit durch Einstellen einer geeigneten Oberflächenrauheit beeinflusst werden kann.

Durch eine optimierte Wirbelerzeugung und eine optimierte Energieübertragung zwischen der mit Wirbelablösungen durchsetzten Fluidströmung und dem Schwinger, kann sich insgesamt eine höhere Effizienz ergeben.

Denkbar ist, dass der Wirbelerzeuger und / oder der Schwinger eine veränderbare Ausgangsform aufweisen. Dabei kann unter der Ausgangsform die Form des Wirbelerzeugers bzw. des Schwingers verstanden werden, die dieser, ohne einem Fluidstrom ausgesetzt zu sein, einnimmt. Dann lässt sich beispielsweise die Eigenfrequenz des Wirbelerzeugers bzw. des Schwingers einstellen. Auch hierdurch lässt sich die Effizienz der Fluidkraftanlage weiter steigern.

Um die Form zu ändern, kann der Wirbelerzeuger bzw. der Schwinger eine elastisch vorformbare Oberfläche aufweisen. Im Innern des Wirbelerzeugers bzw. des Schwingers kann eine motorische Stelleinrichtung vorgesehen sein. Die motorische Stelleinrichtung kann ausgebildet sein, die Oberfläche zu verformen. Die Verformung kann in Abhängigkeit eines Maßes des Fluids, beispielsweise in Abhängigkeit einer Fluidgeschwindigkeit, erfolgen.

Besonders flexible Anpassungsmöglichkeiten zur Optimierung der Effizienz der Energieumwandlung ergeben sich, wenn der Schwinger ausgebildet ist, sich unabhängig vom Wirbelerzeuger zu bewegen.

Dazu ist beispielsweise denkbar, dass der Wirbelerzeuger und der Schwinger als zwei separate Elemente ausgebildet sind. Der Wirbelerzeuger und der Schwinger können voneinander beabstandet angeordnet sein. Somit kann der Wirbelerzeuger eine für die Erzeugung von Wirbelablösungen optimierte Form aufweisen. Der Schwinger kann eine andere Form als der Wirbelerzeuger aufweisen. Seine Form kann für die energetische Kopplung zwischen den Wirbelablösungen und ihm optimiert sein.

Eine kostengünstige Herstellung und eine einfachere Montage lassen sich erreichen, wenn der Wirbelerzeuger und der Schwinger ein zusammengehörendes Element bilden. Beispielsweise kann es dann genügen, lediglich ein einzelnes, gemeinsames Bodenfundament bereitzustellen.

Der Wirbelerzeuger und / oder der Schwinger können, wenigstens abschnittsweise, eine Form eines Oloids oder zumindest eines Teiles eines Oloids aufweisen.

Unter einem Oloid kann ein Körper mit einer konvexen Hülle zweier verschiedener, sich schneidender Ellipsen verstanden werden.

Bei einer spezifischen Ausgestaltung kann der Oloid eine konvexe Hülle zweier verschiedener, sich schneidender Kreise, insbesondere gleich großer Kreise, sein.

Bei einer noch spezifischeren Ausgestaltung können die Kreise sich senkrecht schneiden, wobei die Mittelpunkte der Kreise einen Abstand zueinander haben, der gleich ihrem Radius ist.

Ein Oloid weist mehrere besondere Eigenschaften auf, die zu Vorzügen beim Einsatz im Bereich der Energiegewinnung aus Fluidströmungen führen können.

Zum einen weist ein Oloid eine Struktur auf, die zwei Kanten, aber keine Ecken umfasst. Die Kanten verlaufen in zueinander in einem Winkel ausgerichteten Ebenen.

Dadurch können sich Wirbelablösungen bei einem Wirbelerzeuger mit einem Oloid, beispielsweise, wenn die Ellipsen zueinander senkrecht sind und insbesondere eine horizontal und die andere vertikal ausgerichtet ist, auf besonders vielfältige Arten bilden. Beispielsweise ist denkbar, dass sich Wirbelablösungen nicht nur links und rechts wie bei einem vertikal ausgerichteten Zylinder, sondern entsprechend den durch die Ebenen gebildeten Quadranten bilden. Es kann sich ein Strömungsfeld ausbilden, das eine höhere Dichte von Wirbelablösungen aufweist im Vergleich zu dem Strömungsfeld hinter einem Zylinder.

Ein einen Oloid aufweisender Schwinger kann, insbesondere wenn er einem solchen Strömungsfeld ausgesetzt wird, in besonders vielfältigen Schwingungsmoden sowie bei drehbarer Lagerung rotatorischen Moden sich bewegen. Es können somit zur Energieerzeugung eine große Vielzahl von Bewegungsmoden, insbesondere Schwingungsmoden, verwendet werden.

Ein Oloid kann, insbesondere bei der noch spezifischeren Ausgestaltung, sich über seine gesamte Oberfläche in einer Taumelbewegung abrollen. Denkbar ist, einen Oloid an einem Fußteil des Wirbelerzeugers drehbar zu lagern. Er kann insbesondere mithilfe einer Taumellagerung derart gelagert sein, dass er seine Abrollbewegung, wie er sie bei eigenständigem Abrollen auf einem Boden ausführen würde, also die Taumelbewegung, vollziehen kann. Denkbar ist ferner, dass ein derart gelagerter Oloid, beispielsweise mithilfe eines Elektromotors, angetrieben wird. Dann wandern während des Taumelns seine Kanten scheinbar entlang der Längsachse. Wirbelablösungen können sich somit an unterschiedlichen Orten entlang der Längsachse zeitlich versetzt ausbilden. Bei einem geeigneten Timing kann der jeweilige zeitliche Versatz zumindest näherungsweise an eine jeweilige Position des Schwingers angepasst sein. Dadurch kann das Strömungsfeld verbreitert werden. Der Schwinger kann zu Schwingungen mit besonders großen Amplituden angeregt werden.

Ein weiterer Vorteil ist dabei, dass vorsehbar ist, dass der Oloid des Wirbelerzeugers selbst allenfalls eine Taumelbewegung und keine vollständigen, oszillierenden Schwenkbewegungen vollzieht. Im Vergleich zu einem sonst oszillierenden Wirbelerzeuger und Schwinger, wie er aus dem eingangs genannten Stand der Technik bekannt ist, lässt somit eine solche Konstruktion eine verlängerte Lebensdauer erwarten.

Allgemein kann der mit einem Oloid versehene Wirbelerzeuger in verbessertem Maße dynamisch mit seiner Fluid-durchströmten Umgebung interagieren.

Um sich wechselnden Fluidströmungsrichtungen, insbesondere Windrichtungen, anpassen zu können, kann vorgesehen sein, dass der Wirbelerzeuger und / oder der Schwinger drehbar gelagert ist bzw. sind.

Denkbar ist auch, dass um den Wirbelerzeuger mehrere Schwinger angeordnet sind, sodass bei wechselnden Fluidströmungsrichtungen jeweils der Wirbelerzeuger Wirbel erzeugt, die dann zumindest auf einen Teil der Schwinger treffen.

Die Bildung von Wirbelablösungen lässt sich weiter verbessern, wenn der Wirbelerzeuger zumindest bereichsweise eine strukturierte und / oder raue Oberfläche aufweist. Unter einer rauen Oberfläche kann dabei verstanden werden, dass die Oberfläche zumindest bereichsweise eine Rautiefe von wenigstens 1 $\mu$m, insbesondere von wenigstens 10 $\mu$m, aufweist.

Durch Oberflächenstrukturierung können zudem auch die Muster der Wirbelablösungen beeinflusst werden. Insbesondere hat sich gezeigt, dass mit zunehmender Oberflächenrauheit sich die Wirbelablösungsmuster verändern können.

Denkbar ist beispielsweise eine Oberfläche mit verteilten Rauheitselementen, wie Grübchen oder kleinen, senkrecht zur Strömungsrichtung ausgerichteten Vorsprüngen. Derartige Strukturen können als Turbulenzförderer wirken und die Ablösung und Bildung von Wirbeln begünstigen. Denkbar ist insbesondere, dass die Rauheitselemente so ausgerichtet werden, dass sie eine Grenzschicht senkrecht zur Strömungsrichtung des Fluid möglichst stark beeinflussen. Insbesondere können sie senkrecht zur Strömungsrichtung ausgerichtet sein.

Die Fluidkraftanlage kann wenigstens zwei Wirbelerzeuger und / oder wenigstens zwei Schwinger aufweisen. Insbesondere können einem Wirbelerzeuger mehrere Schwinger zugeordnet sein. Die Schwinger können sich entsprechend der Fließrichtung des Fluids hinter dem Wirbelerzeuger und hintereinander angeordnet sein. Die in Form der Wirbelablösungen vorliegende Energie lässt sich somit noch effizienter abgreifen. Die Formen der wenigstens zwei Schwinger können sich unterscheiden. Damit kann dem Umstand Rechnung getragen werden, dass die Wirbelablösungen am ersten Schwinger noch energiereicher sind als diejenigen am zweiten Schwinger. Alternativ oder ergänzend können mehrere Wirbelerzeuger einem Schwinger zugeordnet sein. So können beispielsweise Wirbelablösungen bei verschiedenen Fluidströmungsrichtungen erzeugt werden.

Eine Eigenfrequenz des Schwingers kann einstellbar sein. Insbesondere kann die Fluidkraftanlage eingerichtet sein, die Eigenfrequenz des Schwingers zu variieren. Durch Variieren der Eigenfrequenz des Schwingers kann diese an die Frequenz und / oder das Muster der Wirbelablösungen und somit an die jeweiligen Fluidströmungen an und / oder hinter dem Wirbelerzeuger angepasst werden.

Der Schwinger kann wenigstens ein Gelenk aufweisen. Das Gelenk kann insbesondere ein Drehgelenk sein. Das Gelenk kann begrenzt beweglich sein. Beispielsweise kann ein maximaler aus Lenkwinkel, der mit dem Gelenk erzielbar ist, auf unter 180° begrenzt sein. Es können auch mehrere Gelenke vorhanden sein.

Durch das oder die Gelenke lässt sich eine maximale Amplitude, die der Schwinger erreichen kann, vergrößern. Auch kann der Schwinger nach Art einer Geißel schwingen. Der Bereich, insbesondere die Fläche, entlang der ein Energieübertrag aus dem Strömungsfeld zum Schwinger stattfinden kann, lässt sich hierdurch vergrößern. Der Energieübergang aus dem Fluid zum Schwinger kann dadurch noch weiter verbessert werden.

In dem Gelenk bzw. in den Gelenken kann wenigstens ein zusätzlicher Generator angeordnet sein. Der wenigstens eine Generator kann genutzt werden, um Energie aus der Relativbewegung der beiden Arme des Gelenks zu ziehen.

Denkbar ist alternativ oder ergänzend, dass wenigstens zwei Arme des Gelenks bzw. der Gelenke beispielsweise über Gummizüge oder Seilzüge miteinander gekoppelt sind, sodass sich Energie aus Summen von Relativbewegungen von Armen der Gelenke ziehen lässt. Hierdurch lassen sich der materielle Aufwand und damit Kosten für den Generator bzw. für die Generatoren reduzieren. Auch kann das Gewicht des schwingenden Teils des Schwingers reduziert werden, beispielsweise wenn der Generator bzw. die Generatoren selbst nicht Teil dieses Teils des Schwingers ist bzw. sind und nicht mitschwingen braucht bzw. brauchen.

Eine weitere Effizienzsteigerung bei der Gewinnung elektrischer Energie lässt sich erreichen, wenn der Generator ein Halbach-Array aufweist. Häufig werden Generatoren verwendet, die auf elektromagnetischer Basis arbeiten. Durch das Halbach-Array können Streuverluste von Magnetfeldern der für solche Generatoren erforderlichen Magnete, insbesondere Permanentmagnete und / oder Elektromagnete, verringert werden. Magnetfelder lassen sich auf die Bereiche konzentrieren, in denen sich Spulen oder elektrische Leiter für eine elektromagnetische Induktion befinden.

Eine solche Ausrichtung kann besonders vorteilhaft sein, wenn andere Maßnahmen zur Förderung der Induktion des zu erzeugenden elektrischen Stroms nicht oder nur eingeschränkt einsetzbar sind. Beispielsweise kann es bei für derartige Fluidkraftanlage notwendig sein, verhältnismäßig große Spaltabstände zwischen Spulen und / oder Magneten zuzulassen, sodass eine ansonsten abgeschwächte elektromagnetische Induktion Dank des Halbach-RS zumindest teilweise kompensiert werden kann.

Denkbar ist, den Generator oder zumindest Teile des Generators mithilfe von 3-D-Druckverfahren herzustellen. Insbesondere ist denkbar, eine Halterung für das Halbach-Array und / oder einen Rotor und / oder einen Stator mittels 3D-Druck herzustellen. Dadurch lässt sich der Generator besonders günstig herstellen.

Um eine besonders lange Lebensdauer zu erzielen, kann der Generator als bürstenloser Generator ausgebildet sein.

Beispielsweise kann der Generator für eine hohe Effizienz und Einfachheit im Aufbau als Permanentmagnetgenerator ausgebildet sein.

Der Generator kann als linearer, elektromagnetischer Generator ausgebildet sein. Insbesondere kann wenigstens einen Magnet, insbesondere einen Permanentmagnet umfassen. Der Generator kann wenigstens eine Induktionsspule umfassen.

Unter einem linearen, elektromagnetischen Generator kann auch ein Generator verstanden werden, bei dem der Magnet um die Induktionsspule herum ausgebildet ist, wobei aber die Induktionsspule zur Induktion jedoch nicht ausschließlich relativ zum Magneten rotiert. Der Magnet kann beispielsweise zylindrisch oder im Wesentlichen zylindrisch ausgebildet sein. Die Induktionsspule kann sich in seinem Inneren befinden. Durch das Schwingen des Schwingers kann der Magnet relativ zur Induktionsspule hin- und her oszillieren. Durch eine solche lineare oder zumindest annähernd lineare Bewegung kann elektrischer Strom in der Induktionsspule induziert werden.

Dabei kann vorgesehen sein, dass die Induktionsspule relativ zum Boden oder zum Fußteil fixiert ist, sich somit nicht mit den Bewegungen des Schwingers mitbewegt. Die Induktionsspule kann somit einen Stator bilden. Der Magnet kann dann einen Rotor bilden.

Der Generator kann insbesondere ausgelegt sein, niederfrequente Oszillationsbewegungen mit hoher Amplitude effizient in Elektrizität umzuwandeln. Dazu kann er getriebelos ausgebildet sein.

Ist der Generator zylindrisch oder zumindest im Wesentlichen zylindrisch, so lässt er sich auf einfache Weise in die Fluidkraftanlage integrieren, insbesondere auch dann, wenn der Schwinger eine Form eines Oloid aufweist.

Denkbar ist ferner, dass, wenn der gesamte Schwinger oszilliert, der Generator am Boden oder am Fußteil montiert wird, um die Schwingungsenergie des Schwingers in elektrische Energie umzuwandeln.

Denkbar ist auch, dass der Generator einen piezoelektrischen Wandler umfasst. Der piezoelektrischen Wandler kann PZT-Keramiken enthalten. Denkbar sind auch piezoelektrischen Wandler auf Basis von Polymeren, beispielsweise PVDF.

Die piezoelektrischen Wandler können ein im Vergleich zu elektromagnetischen Wandlern geringes Gewicht aufweisen.

Sie können insbesondere auch am Schwinger, insbesondere am schwingenden Teil des Schwingers, angeordnet sein. Dann kann die Energieumwandlung in elektrische Energie direkt am Schwinger erfolgen.

Solche Generatoren mit piezoelektrischen Wandlern können besonders wartungsarm sein, was beispielsweise für IoT-Anwendungen vorteilhaft sein kann.

Im Falle, dass das Fluid Luft entspricht oder zumindest umfasst, ergibt sich eine Windkraftanlage. Da Bewegungen des Schwingers in der Regel auf einen engen Raum umgrenzt bleiben, sind typische Risiken, wie sie mit der Nutzung von Windkraftanlagen bislang in Verbindung gebracht werden, beispielsweise im Hinblick auf Vogelschlag, reduziert.

Im Falle, dass das Fluid Wasser entspricht oder zumindest Wasser umfasst, ergibt sich eine Wasserkraftanlage. Die Wasserkraftanlage kann besonders gut fischgängig sein.

Die Fluidkraftanlage oder zumindest ein Teil der Fluidkraftanlage kann vorzugsweise wenigstens einem Material ausgebildet sein, das starken elektromagnetischen Strahlungen, beispielsweise starker UV-Strahlung, aussetzbar ist und / oder in großen Temperaturbereichen einsetzbar und / oder eine Lebensdauer von wenigstens 20 Jahren aufweist. Die Fluidkraftanlage kann staubgeschützt und / oder Feuchtigkeit geschützt sein. Die Fluidkraftanlage kann beispielsweise wenigstens dem Standard IP67 entsprechen. Allgemein stellen Fluidkraftanlage große Investitionen dar, die somit zur Amortisation eine zuverlässig lange Lebensdauer, typischerweise von wenigstens 20 Jahren, erfordern. Durch die lange Lebensdauer können auch Wartungsaufwände geringgehalten werden.

In den Rahmen der Erfindung fällt auch ein **Verfahren zur Erzeugung** elektrischer Energie durch ein strömendes Fluid, insbesondere durch strömende Luft, wobei das strömende Fluid einen Wirbelerzeuger und einen Schwinger umströmt, wobei der Wirbelerzeuger und / oder der Schwinger eine längliche Form mit einer Längsachse aufweisen oder aufweist, wobei der Querschnitt entlang der Längsachse des Wirbelerzeugers und / oder des Schwingers in wenigstens zwei Freiheitsgraden variiert, und der Schwinger zu Oszillationen durch das Fluid angeregt wird. Das Verfahren ermöglicht somit eine verbesserte Bildung von Wirbelablösungen sowie eine verbesserte Energieumwandlung der in den Wirbelablösungen enthaltenen Energie in elektrische Energie, sodass das Verfahren insgesamt eine hocheffiziente Umwandlung von in der Fluidströmung enthaltener Energie in elektrische Energie ermöglicht.

Allgemein können der Wirbelerzeuger und / oder der Schwinger einen Teil einer Fluidkraftanlage bilden. Die Fluidkraftanlage kann wenigstens eines der Merkmale der vorangehend beschriebenen Fluidkraftanlage aufweisen.

Denkbar ist ferner, dass die an die Fluidkraftanlage angelegte Last selbsttätig auf der Grundlage von Wetterdaten, geographischen Daten und / oder zeitlichen Daten angepasst wird. Auch hierdurch lässt sich die Effizienz der Fluidkraftanlage weiter verbessern.

Bei einer weiteren Verbesserung des Verfahrens können der Wirbelerzeuger und / oder der Schwinger in Abhängigkeit eines Maßes des Fluidstromes in ihrer Lage und / oder ihrer Position verändert werden. Beispielsweise können der Wirbelerzeuger und / oder der Schwinger in Abhängigkeit der Strömungsrichtung des Fluids gedreht, verschoben und / oder verschwenkt werden.

Dazu kann die Fluidkraftanlage wenigstens einen Sensor aufweisen. Der Sensor kann eingerichtet sein, das Maß des Fluidstromes zu erfassen. Die Fluidkraftanlage, insbesondere der Wirbelerzeuger und / oder der Schwinger, kann wenigstens ein Stellglied, beispielsweise einen Stellmotor, aufweisen. Das Stellglied kann eingerichtet sein, den Wirbelerzeuger und / oder den Schwinger zu drehen und / oder zu verschwenken und / oder zu verschieben.

Denkbar ist ferner, eine Eigenfrequenz des Wirbelerzeugers und / oder des Schwingers einzustellen. Die Eigenfrequenz kann an eine Frequenz von Wirbelablösungen angepasst sein, um die Effizienz noch weiter zu verbessern.

Dazu kann der Wirbelerzeuger und / oder der Schwinger eine elastisch verformbare Oberfläche aufweisen. Die Oberfläche kann dann, beispielsweise Motor getrieben, verformt werden, um so die Eigenfrequenz und / oder allgemein ein Schwingungsverhalten des Wirbelerzeugers und / oder des Schwingers, insbesondere des Schwingers, einzustellen.

Die Fluidkraftanlage und / oder das Verfahren können auch verwendet werden, um benachbarte Objekte zu schützen. Denkbar ist insbesondere, dass durch die Fluidkraftanlage, insbesondere der Schwinger, Energie dem Fluid entzogen wird, und hierdurch beispielsweise nachfolgende Bauten geringeren äußeren Energien ausgesetzt werden. So lässt sich die Energiegewinnung aus dem Fluidstrom mit dem Schutz von Bauten, beispielsweise Brücken, kombinieren.

In dem die Fluidkraftanlage, insbesondere der Wirbelerzeuger und / oder der Schwinger, das Strömungsverhalten des Fluids verändert, können empfindliche Objekte, die dem Fluidstrom stromabwärts der Fluidkraftanlage ausgesetzt sind, geschützt werden.

Allgemein kann die Fluidkraftanlage zur Steuerung, insbesondere zur Kontrolle des Strömungsverhaltens, des Fluids verwendet werden.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:

| | |
|---|---|
| Fig. 1 | eine erste Fluidkraftanlage in einer schematischen Schrägansicht; |
| Fig. 2 | eine Querschnittsansicht der Fluidkraftanlage gemäß einer Schnittebene II aus Fig. 1; |
| Fig. 3 | eine Querschnittsansicht der Fluidkraftanlage gemäß einer Schnittebene III aus Fig. 1; |
| Fig. 4 | eine Längsschnittansicht der Fluidkraftanlage aus Fig. 1; |
| Fig. 5 | eine vergrößerte Darstellung des Bereichs V aus Fig. 4; |

**EP 4 745 398 A1**

| Fig. 6 | eine weitere Fluidkraftanlage in einer schematischen Schrägansicht; |
|---|---|
| Fig. 7, Fig. 8, Fig. 9 und Fig. 10 | eine weitere Fluidkraftanlage in einer perspektivischen Seitenansicht, einer Draufsicht, einer Seitenansicht; |
| Fig. 10 | eine Variante der Fluidkraftanlage gemäß Fig. 7 bis Fig. 10, mit Naca-Profil; |
| Fig. 11 | eine weitere Fluidkraftanlage in einer perspektivischen Seitenansicht; |
| Fig. 12, Fig. 13, Fig. 14 | eine perspektivische Schrägansicht, eine Draufsicht sowie eine Seitenansicht einer Anordnung von einer Vielzahl von Fluidkraftanlagen gemäß Fig. 11; |
| Fig. 15, Fig. 16, Fig. 17 | eine Draufsicht, eine Seitenansicht sowie eine perspektivische Schrägansicht einer Gruppe von Anordnungen gemäß Fig. 12 bis Fig. 14; |
| Fig. 18 | eine weitere Fluidkraftanlage in einer schematischen Ansicht von oben; |
| Fig. 19 | eine weitere Fluidkraftanlage in einer schematischen Ansicht von oben; und |
| Fig. 20 | ein Flussdiagramm eines Verfahrens zur Erzeugung elektrischer Energie. |

In der folgenden Beschreibung von Ausführungsbeispiel sowie in den Figuren der Zeichnung werden zur Erleichterung des Verständnisses die gleichen Bezugszeichen für sich entsprechende Elemente verwendet.

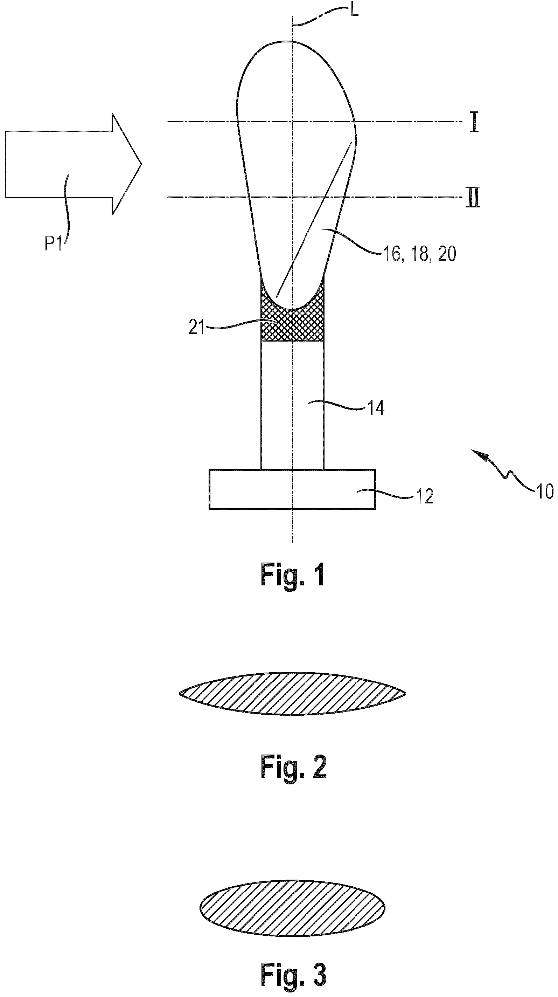

**Fig. 1** zeigt eine erste Fluidkraftanlage **10** in einer perspektivischen Ansicht von schräg vorne. Die Fluidkraftanlage 10 ist vertikal auf einem Fundament **12** montiert.

Die Fluidkraftanlage 10 weist ein Fußteil **14** auf. An das Fußteil 14 ist an seiner Oberseite ein bewegliches Element **16** angeordnet. Das bewegliche Element 16 bildet bei diesem Ausführungsbeispiel einen Wirbelerzeuger **18** als auch einen Schwinger **20.** Der Wirbelerzeuger 18 und der Schwinger 20 sind somit bei diesem Ausführungsbeispiel als ein einziges, zusammengehöriges Element ausgebildet.

Der Wirbelerzeuger 18 und damit auch der Schwinger 20 weisen eine, insbesondere gemeinsame, Längsachse L auf. Aufgrund der vertikalen Ausrichtung der Fluidkraftanlage 10 verläuft auch die Längsachse L in vertikaler Richtung.

Der Schwinger 20 ist über ein Gelenkelement **21** am Fußteil 14 angeordnet. Das Gelenkelement 21 ist in diesem Ausführungsbeispiel aus einem elastischen Material ausgebildet. Es ermöglicht somit, dass der Schwinger 20 aus der Vertikalen, die in Fig. 1 der dort dargestellten Längsachse L entspricht, herausschwenken und insbesondere um die Vertikale herum oszillieren kann. Bei einer besonders kostengünstigen Ausführungsform kann der Schwinger 20 und das Fußteil 14 als ein gemeinsames Teil ausgebildet sein, dass aus einem elastischen Material ausgebildet ist. Bei einer solchen Ausführungsform ist das Gelenkelement 21 dann ebenfalls Teil des gemeinsamen Teils. Das elastische Material kann beispielsweise kohlefaserverstärkter Kunststoff sein. Eine weitere kostengünstige Ausführungsform kann vorsehen, dass das Gelenkelement 21 zwar als separates Teil ausgebildet ist, jedoch aus einem kostengünstigen, elastischen Material wie beispielsweise einem Gummi. Es kann auch ein Federelement, beispielsweise in Form einer Luftfeder und / oder einer Stahlfeder, umfassen. Eine weitere Ausführungsform des Gelenkelements 21 kann auch ein beschränkt bewegliches Kugelgelenk und / oder ein beschränkt bewegliches Drehgelenk umfassen.

Die Fluidkraftanlage 10 ist als Windkraftanlage ausgebildet. Mit einem Pfeil **P1** ist schematisch eine mögliche Fluidströmungsrichtung, in diesem Fall also eine Windrichtung, in Fig. 1 abgebildet.

Der Wirbelerzeuger 18 bzw. Schwinger 20 weisen eine Form eines Oloids auf. Der Oloid ist lang gestreckt.

**Fig. 2** zeigt einen Querschnitt durch die Fluidkraftanlage 10 gemäß der Schnittebene **II** der Fig. 1.

**Fig. 3** zeigt einen Querschnitt durch die Fluidkraftanlage 10 gemäß der Schnittebene **III** der Fig. 1.

Im Vergleich der Fig. 2 mit der Fig. 3 zeigt sich, dass sich die Querschnitte gemäß der Schnittebenen II bzw. III, also entlang der Längsachse L, unterscheiden.

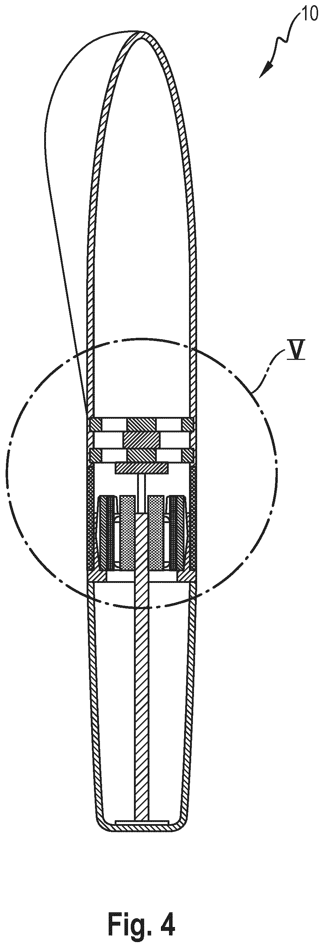

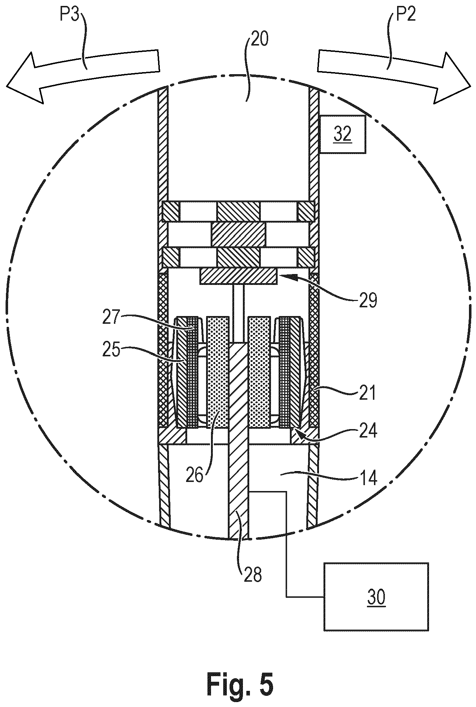

**Fig. 4** zeigt einen Längsschnitt durch die Fluidkraftanlage 10. **Fig. 5** zeigt hieraus in vergrößerter Darstellung einen Ausschnitt V gemäß Fig. 4.

Wie insbesondere anhand von Fig. 5 zu erkennen ist, ist der Schwinger 20 und damit der Wirbelerzeuger 18 über das Gelenkelement 21 am Fußteil 14 gelagert. Der Wirbelerzeuger 18 bzw. der Schwinger 20 können begrenzte, oszillierende Bewegungen ausführen, wie sie beispielhaft mit dem Pfeil **P2** und dem Pfeil **P3** angedeutet sind.

Die oszillierenden Bewegungen werden durch einen Generator **24** in elektrische Energie umgesetzt.

Der Generator 24 weist einen Stator **25** auf, der am Fußteil 14 fixiert ist. Der Stator 25 weist eine Spulenanordnung **27** auf. Im Inneren der Spulenanordnung 27 befindet sich eine Anordnung von Permanentmagneten in Form eines Halbach-Arrays **26.** Bei einer alternativen Ausführungsform können anstelle der Permanentmagnete wie bei einem Dynamo auch Elektromagnete für das Halbach-Array 26 vorgesehen sein. Das Halbach-Array 26 ist über ein Spannseil **28** einer Spannvorrichtung **29** mit dem Schwinger 20 gekoppelt. Bewegungen des Schwingers 20 führen somit zu oszillierenden Bewegungen des Halbach-Arrays 26 relativ zur Spulenanordnung 27. Somit kann durch die Bewegungen elektrischer Strom in der Spulenanordnung 27 induziert werden.

Über die Spannvorrichtung 29 mit ihrem Spannseil 28 kann eine effektive Eigenfrequenz des Schwingers 20 eingestellt werden. Dazu ist das Spannseil 28 an einer Unterseite nicht dargestellt) des Fußteils 14 fixiert. Die Spannung des Spannseils 28 kann mithilfe einer, in Fig. 5 lediglich schematisch angedeuteten, Steuerung 30 eingestellt werden. Die Steuerung 30 ist mit einem Sensor **32** verbunden und kann vom Sensor 32 abrufen. Der Sensor 32 ist vorzugsweise am

7

Schwinger 20 angeordnet. Der Sensor 32 kann ein Geschwindigkeitssensor zur Erfassung der Geschwindigkeit des Fluidstroms sein.

Die Fluidkraftanlage 10 ist der Steuerung 30 und dem Sensor 32 und mithilfe der Spannvorrichtung 29 eingerichtet, die Eigenfrequenz in Abhängigkeit einer vom Sensor 32 gemessenen Fluidgeschwindigkeit einzustellen.

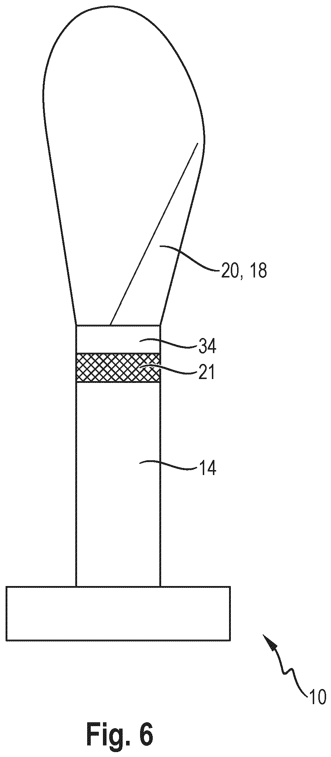

**Fig. 6** zeigt eine weitere Ausführungsform einer Fluidkraftanlage 10. Die Fluidkraftanlage 10 dieser Ausführungsform entspricht, soweit nicht anders genannt, der vorangehend beschriebenen Ausführungsform.

Im Unterschied zu der vorangehend beschriebenen Ausführungsform weist das Gelenkelement 21 zusätzlich ein Drehlager **34** auf. Über das Drehlager 34 ist der Schwinger 20 drehbar gegenüber dem Fußteil 14 gelagert. Somit kann sich der Schwinger 20 bzw. der Wirbelerzeuger 18 auf unterschiedliche Fluidströmungsrichtungen einstellen.

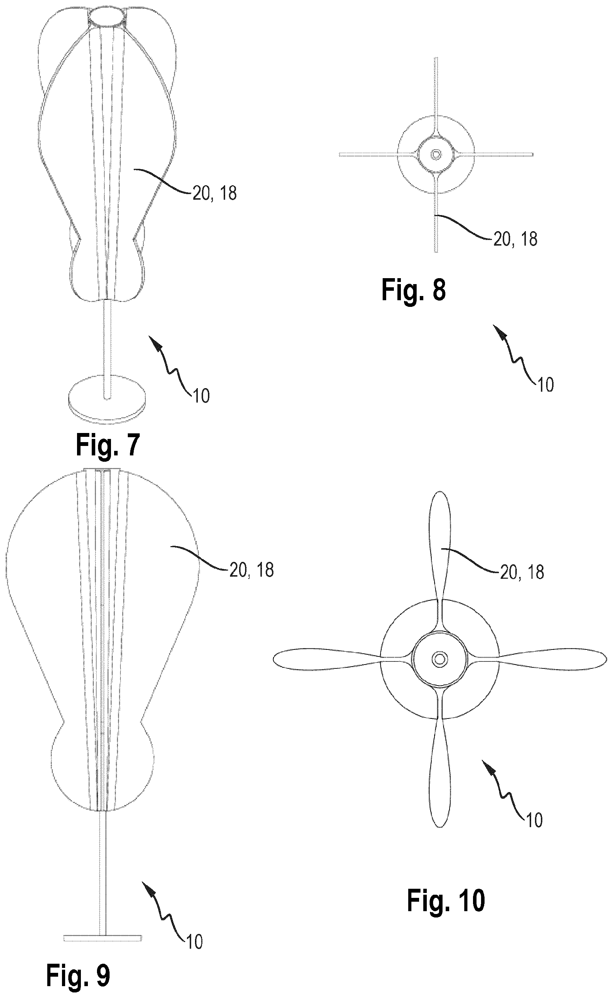

**Fig. 7** bis **Fig. 9** zeigen verschiedene Ansichten einer weiteren Fluidkraftanlage 10. Der Schwinger 20 dieser Ausführungsform weist vier Flügel auf, die in etwa einer Projektion eines Oloids mit unterschiedlich großen Basiskreisen auf eine Ebene entsprechen. Der Schwinger 20 kann auch als Wirbelerzeuger 18 fungieren.

**Fig. 10** zeigt eine Variante dieser Ausführungsform einer Fluidkraftanlage 10, bei der die Flügel mit NACA-Profilen versehen sind.

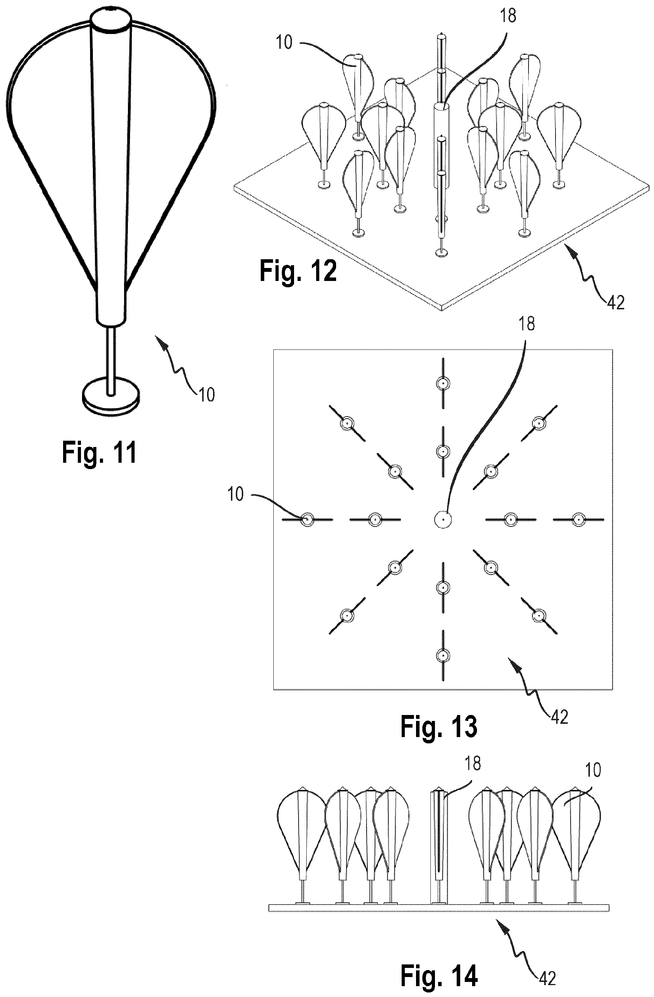

**Fig. 11** zeigt eine weitere Ausführungsform einer Fluidkraftanlage 10, die gegenüber den beiden vorangehend geschilderten Ausführungsformen dahingehend vereinfacht ist, dass sie lediglich zwei Flügel aufweist. Jeder der Flügel entspricht im Wesentlichen einem einseitig nach außen hin abgerundeten Dreieck. Auch bei dieser Ausführungsform ist es denkbar, die Flügel mit NACA-Profilen zu versehen.

**Fig. 12** bis **Fig. 14** zeigt eine Anordnung **42** einer Vielzahl solcher Fluidkraftanlagen 10 gemäß Fig. 11. Zur Vereinfachung der Darstellungen sind in diesen Figuren jeweils lediglich eines der jeweiligen Elemente mit dem entsprechenden Bezugszeichen versehen.

Zentral ist ein zusätzlicher, separater Wirbelerzeuger 18 in Form eines vertikalen Zylinders vorgesehen. Die einzelnen Fluidkraftanlagen 10 sind sternförmig angeordnet. Durch die Anordnung 42 können Fluidströmungen aus verschiedenen Richtungen besonders effizient genutzt werden.

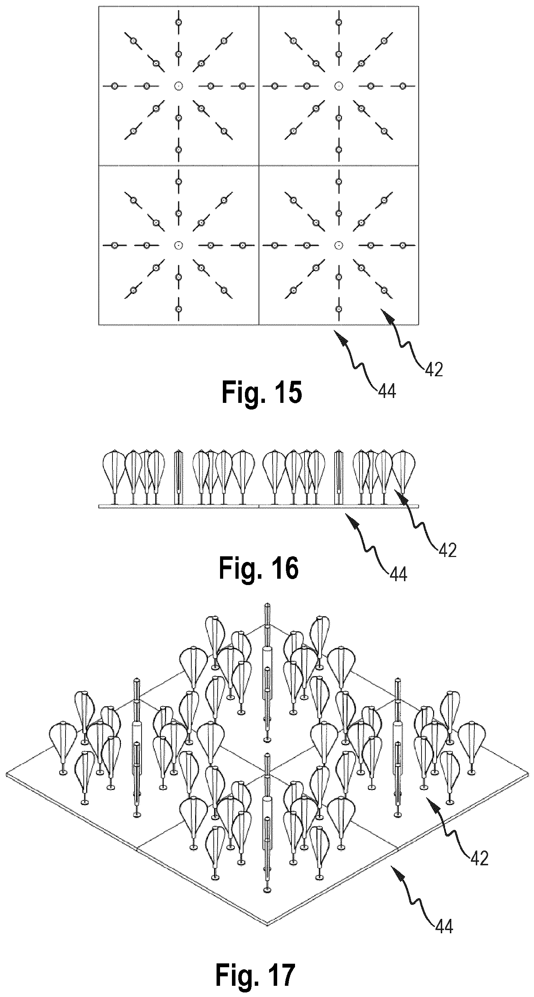

**Fig. 15** bis **Fig. 17** zeigen in verschiedenen Ansichten eine Gruppe **44** von vier Anordnungen 42 gemäß Fig. 12 bis Fig. 14, von denen aus Vereinfachungsgründen wiederum nur eine mit einem Bezugszeichen versehen ist. Eine solche Gruppe 44 kann verwendet werden, um beispielsweise besonders großflächig Fluidströmungen nutzen zu können.

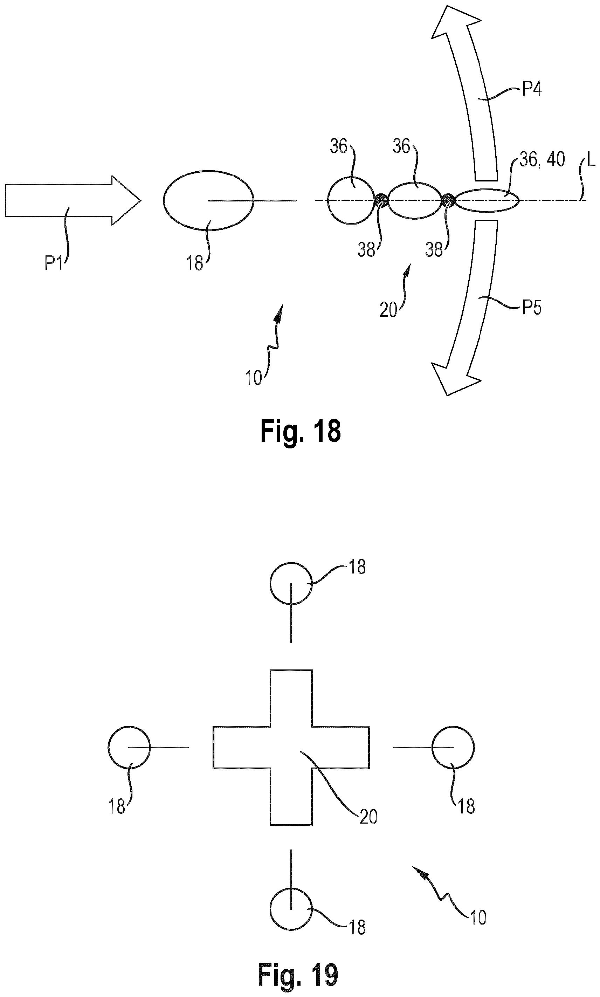

**Fig. 18** zeigt eine weitere Ausführungsform einer Fluidkraftanlage 10 in einer stark schematisierten Darstellung von oben. Bei dieser Ausführungsform sind der Wirbelerzeuger 18 und der Schwinger 20 voneinander beanstandet. Sie bilden somit zwei voneinander unabhängige Elemente. Der Wirbelerzeuger 18 oder ein Teil des Wirbelerzeugers 18 kann beispielsweise die Form eines Oloids aufweisen. In Fig. 18 ist dies durch die zwei einen Oloid bildenden Ellipsen, von denen eine senkrecht zur Bildrichtung verläuft, schematisch dargestellt.

Der Schwinger 20 besteht aus mehreren Teilelementen **36,** die mithilfe von Drehgelenken **38** miteinander gelenkig verbunden sind.

Die Drehgelenke 38 ermöglichen Bewegungen der Teilelemente 36 relativ zueinander in der Bildebene gemäß Fig. 18. Die Teilelemente 36 können je für sich starr ausgebildet sein.

Somit kann das dritte Teilelement 36, in Fig. 18 zusätzlich mit einem gesonderten Bezugszeichen als drittes Teilelement **40** markiert, eine gegenüber einem aus lediglich einem einzigen Teilelement 36 bestehenden Schwinger 20 erheblich vergrößerte maximale Amplitude, wie sie mit Pfeilen **P4** und **P5** schematisch angedeutet ist, erzielen.

Durch die durch die Drehgelenke 38 eingeführten zusätzlichen Freiheitsgrade kann ein solcher Schwinger 20 zusätzliche Schwingungsmoden und Eigenfrequenzen aufweisen. Wie in Fig. 18 angedeutet, können die einzelnen Teilelemente 30 unterschiedliche Formen aufweisen.

Beispielsweise können sie entlang der wiederum mit einem Pfeil P1 markierten Fluidströmungsrichtung länglicher und schmaler gestaltet sein. Damit kann beispielsweise dem Umstand Rechnung getragen werden, dass sich mit größerer Entfernung vom Wirbelerzeuger 18 die Formen der durch den Wirbelerzeuger 18 gebildeten Wirbelablösungen weiterentwickeln. Mithilfe unterschiedlicher Formen der Teilelemente 36 einschließlich dem dritten Teilelement 40 kann somit die Effizienz der Fluidkraftanlage 10 noch weiter verbessert werden. Es können dazu auch mehr als drei Teilelemente 36 vorgesehen sein.

**Fig. 19** zeigt eine schematische Darstellung einer weiteren Ausführungsform einer Fluidkraftanlage 10 in einer Draufsicht.

Diese Ausführungsform weist mehrere Wirbelerzeuger 18 auf, die um einen zentralen Schwinger 20 herum angeordnet sind. Der Schwinger 20 kann beispielsweise analog zu den vorangehend beschriebenen Schwinger 20 aufgebaut sein.

Die Wirbelerzeuger 18 können analog zu den vorangehend beschriebenen Wirbelerzeuger 18 aufgebaut sein. Bei einer besonders einfachen Ausführungsform sind die Wirbelerzeuger 18 starr. Sie können vertikal ausgerichtete, starre Körper umfassen, deren Querschnitt sich über ihre Längsachse hinweg verändert. Die Wirbelerzeuger 18 können jeweils für die Fluidstromrichtungen optimiert sein, bei denen sich jeweils der Schwinger 20 stromabwärts des betreffenden Wirbelerzeugers 18 befindet. Die Wirbelerzeuger 18 können somit jeweils relativ zum Schwinger 20 unterschiedlich ausgerichtet sein.

Somit kann mit der Fluidkraftanlage 10 auch bei wechselnden Fluidstromrichtungen effizient elektrische Energie gewonnen werden.

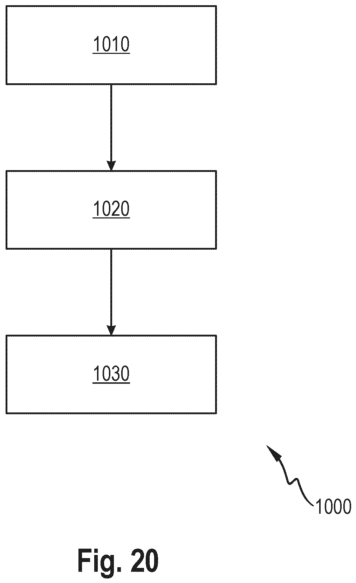

Abschließend zeigt **Fig. 20** ein Verfahren **1000** zur Erzeugung elektrischer Energie durch ein strömendes Fluid.

Zur Erläuterung des Verfahrens 1000 wird auf die vorangehend eingeführten Bezugszeichen zum einfacheren Verständnis Bezug genommen.

In einer Phase **1010** umströmt das Fluid einen Wirbelerzeuger 18. Am Wirbelerzeuger 18 treten Wirbelablösungen auf. Der Wirbelerzeuger 18 kann einen Oloid aufweisen.

Diese Wirbelablösungen breiten sich aus und bilden beispielsweise eine Kármánschen Wirbelstraße.

In einer Phase **1020** treffen sie auf einen Schwinger 20. Der Schwinger 20 wird zu Oszillationen angeregt.

In einer Phase **1030** werden die Oszillationen des Schwingers 20 in einem Generator 24 in elektrische Energie umgesetzt.

Allgemein kann das Verfahren 1000 mit Fluidkraftanlagen 10, insbesondere mit Wirbelerzeuger 18 und Schwinger 20, der vorangehend beschriebenen Ausführungsformen genutzt werden. Insbesondere können die Phasen 1010 und 1020, also die Wirbelerzeugung durch den Wirbelerzeuger 18 und die Anregung des Schwingers 20 zu Oszillationen auch mit Fluidkraftanlage 10 realisiert werden, bei denen der Wirbelerzeuger 18 und der Schwinger 20 als ein gemeinsames Element ausgebildet sind. In einem solchen Fall findet die Wirbelerzeugung und die Anregung zu Oszillationen im Wesentlichen an der gleichen Stelle, insbesondere am Anfang der Kármánschen Wirbelstraße, statt.

**Bezugszeichenliste**

| | |
|---|---|
| 10 | Fluidkraftanlage |
| 12 | Fundament |
| 14 | Fußteil |
| 16 | Element |
| 18 | Wirbelerzeuger |
| 20 | Schwinger |
| 21 | Gelenkelement |
| 24 | Generator |
| 25 | Stator |
| 26 | Halbach-Array |
| 27 | Spulenanordnung |
| 28 | Spannseil |
| 29 | Spannvorrichtung |
| 30 | Steuerung |
| 32 | Sensor |
| 34 | Drehlager |
| 36 | Teilelement |
| 38 | Drehgelenk |
| 40 | Teilelement |
| 42 | Anordnung |
| 44 | Gruppe |
| 1000 | Verfahren |
| 1010 | Phase |
| 1020 | Phase |
| 1030 | Phase |
| II | Schnittebene |
| III | Schnittebene |
| L | Längsachse |
| P1 | Pfeil |
| P2 | Pfeil |
| P3 | Pfeil |
| P4 | Pfeil |
| P5 | Pfeil |
| V | Ausschnitt |

**Patentansprüche**

1. **Fluidkraftanlage (10),** umfassend einen Generator (24), einen Wirbelerzeuger (18) und einen Schwinger (20), der, wenn er von einem Fluid, insbesondere Luft, umströmt wird, zu einer oszillierenden Bewegung angeregt wird, **dadurch gekennzeichnet,**
**dass** der Wirbelerzeuger (18) und / oder der Schwinger (20) eine längliche Form mit einer Längsachse (L) aufweist oder aufweisen, wobei sich die Form des Querschnitts des Wirbelerzeugers (18) und / oder des Schwingers (20) ändert.

2. Fluidkraftanlage nach dem vorhergehenden Anspruch, **dadurch gekennzeichnet, dass** der Schwinger (20) ausgebildet ist, sich unabhängig vom Wirbelerzeuger (18) zu bewegen.

3. Fluidkraftanlage nach einem der vorhergehenden Patentansprüche, **dadurch gekennzeichnet, dass** der Wirbelerzeuger (18) und/oder der Schwinger (20) wenigstens abschnittsweise eine Form eines Oloids oder zumindest eines Teiles eines Oloids aufweist.

4. Fluidkraftanlage nach einem der vorhergehenden Patentansprüche, **dadurch gekennzeichnet, dass** der Wirbelerzeuger (18) und / oder der Schwinger (20) drehbar gelagert ist bzw. sind.

5. Fluidkraftanlage nach einem der vorhergehenden Patentansprüche, **dadurch gekennzeichnet, dass** der Wirbelerzeuger (18) zumindest bereichsweise eine strukturierte und / oder raue Oberfläche aufweist.

6. Fluidkraftanlage nach einem der vorhergehenden Patentansprüche, **dadurch gekennzeichnet, dass** die Fluidkraftanlage (10) wenigstens zwei Wirbelerzeuger (18) und / oder wenigstens zwei Schwinger (20) aufweist.

7. Fluidkraftanlage nach einem der vorhergehenden Patentansprüche, **dadurch gekennzeichnet, dass** eine Eigenfrequenz des Schwingers (20) einstellbar ist, insbesondere dass die Fluidkraftanlage (10) eingerichtet ist, die Eigenfrequenz des Schwingers (20) zu variieren.

8. Fluidkraftanlage nach einem der vorhergehenden Patentansprüche, **dadurch gekennzeichnet, dass** der Schwinger (20) wenigstens ein Gelenk, beispielsweise ein Drehgelenk (38), aufweist.

9. Fluidkraftanlage nach einem der vorhergehenden Patentansprüche, **dadurch gekennzeichnet, dass** der Generator (24) ein Halbach-Array (26) aufweist.

10. Fluidkraftanlage nach einem der vorhergehenden Patentansprüche, **dadurch gekennzeichnet, dass** der Generator (24) einen piezoelektrischen Wandler umfasst.

11. **Verfahren (1000) zur Erzeugung elektrischer Energie** durch ein strömendes Fluid, insbesondere durch strömende Luft, wobei das strömende Fluid einen Wirbelerzeuger (18) und einen Schwinger (20) umströmt, wobei der Wirbelerzeuger (18) und / oder der Schwinger (20) eine längliche Form mit einer Längsachse aufweisen oder aufweist, wobei der Querschnitt entlang der Längsachse (L) des Wirbelerzeugers (18) und / oder des Schwingers (20) in wenigstens zwei Freiheitsgraden variiert, und der Schwinger (20) zu Oszillationen durch das Fluid angeregt wird.

**Fig. 1**

**Fig. 2**

**Fig. 3**

10

V

**Fig. 4**

Fig. 5

20, 18

34

21

14

10

Fig. 6

20, 18

**Fig. 7**

10

20, 18

**Fig. 8**

10

20, 18

10

**Fig. 9**

20, 18

10

**Fig. 10**

Fig. 11

Fig. 12

Fig. 13

Fig. 14

Fig. 15

Fig. 16

Fig. 17

Fig. 18

Fig. 19

1010

1020

1030

1000

# Fig. 20

Europäisches
Patentamt

European
Patent Office

Office européen
des brevets

# EUROPÄISCHER RECHERCHENBERICHT

**Nummer der Anmeldung**

EP 24 21 2772

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/109362 A1 (TAIHEIYO CEMENT CORP [JP]; AIZAWA TAKEMI [JP] ET AL.) 19. Oktober 2006 (2006-10-19) * Abbildungen 1, 8, 10-15, 22, 31 * * Absätze [0027], [0044] * ----- | 1-11 | INV. F03D5/06 |
| X | KR 101 910 526 B1 (BLUEWAY CO LTD [KR]) 4. Januar 2019 (2019-01-04) * Abbildung 1 * * das ganze Dokument * ----- | 1-11 | |
| X | US 2017/284365 A1 (YAÑEZ VILLARREAL DAVID JESÚS [ES]) 5. Oktober 2017 (2017-10-05) * Abbildung 1 * * Absätze [0026], [0099], [0118] * ----- | 1-11 | |
| X | WO 2016/116657 A1 (MEDRANO SÁNCHEZ CARLOS [ES]) 28. Juli 2016 (2016-07-28) * Abbildungen 3, 6, 7 * * das ganze Dokument * ----- | 1-11 | |

**RECHERCHIERTE SACHGEBIETE (IPC)**

F03D

Der vorliegende Recherchenbericht wurde für alle Patentansprüche erstellt

| Recherchenort | Abschlußdatum der Recherche | Prüfer |
|---|---|---|
| Den Haag | 11. April 2025 | Altmann, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 24 21 2772

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2025

| Im Recherchenbericht angeführtes Patentdokument | Datum der Veröffentlichung | Mitglied(er) der Patentfamilie | Datum der Veröffentlichung |
|---|---|---|---|
| WO 2006109362 A1 | 19-10-2006 | KEINE | |
| KR 101910526 B1 | 04-01-2019 | KEINE | |
| US 2017284365 A1 | 05-10-2017 | CN 107078621 A | 18-08-2017 |
| | | EP 3204635 A2 | 16-08-2017 |
| | | ES 2796283 T3 | 26-11-2020 |
| | | JP 6762292 B2 | 30-09-2020 |
| | | JP 2017530675 A | 12-10-2017 |
| | | US 2017284365 A1 | 05-10-2017 |
| | | WO 2016055370 A2 | 14-04-2016 |
| WO 2016116657 A1 | 28-07-2016 | ES 2578428 A1 | 26-07-2016 |
| | | WO 2016116657 A1 | 28-07-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9444372 B2